(19) Europäisches Patentamt
European Patent Office
Office européen des brevets

(11) **EP 2 223 082 B1**

(12) **FASCICULE DE BREVET EUROPEEN**

(45) Date de publication et mention de la délivrance du brevet:
**29.06.2016 Bulletin 2016/26**

(21) Numéro de dépôt: **08863935.6**

(22) Date de dépôt: **18.12.2008**

(51) Int Cl.:
**G01N 19/04** *(2006.01)*    **A61K 9/14** *(2006.01)*

(86) Numéro de dépôt international:
**PCT/FR2008/052373**

(87) Numéro de publication internationale:
**WO 2009/081063 (02.07.2009 Gazette 2009/27)**

(54) **DISPOSITIF DE DETERMINATION DE LA BIOADHESIVITE DES PREPARATIONS PATEUSES**

VERFAHREN ZUR BESTIMMUNG DES BIOHAFTVERMÖGENS VON PASTÖSEN ZUBEREITUNGEN

DEVICE FOR DETERMINING THE BIOADHESIVENESS OF PASTY PREPARATIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.12.2007 FR 0760113**

(43) Date de publication de la demande:
**01.09.2010 Bulletin 2010/35**

(73) Titulaire: **Paris, Laurence**
**03390 Montmarault (FR)**

(72) Inventeur: **Paris, Laurence**
**03390 Montmarault (FR)**

(74) Mandataire: **Richebourg, Michel François**
**Cabinet Michel Richebourg**
**"Le Clos du Golf"**
**69, rue Saint-Simon**
**42000 Saint Etienne (FR)**

(56) Documents cités:
**EP-B- 0 671 906**

- L.BRANNON-PEPPAS AND W.REILLY: "In vitro testing of bioadhesion of solutions for buccal administration and drug delivery" PROCEED. INTERN. SYMP. CONTROL. REL. BIOACT. MATER, vol. 23, 1996, pages 513-514, XP009107777
- MADSEN F ET AL: "A rheological assessment of the nature of interactions between mucoadhesive polymers and a homogenised mucus gel" BIOMATERIALS, ELSEVIER SCIENCE PUBLISHERS BV., BARKING, GB, vol. 19, no. 11-12, 1 juin 1998 (1998-06-01), pages 1083-1092, XP004161370 ISSN: 0142-9612
- DAS NEVES J ET AL: "Performance of an in vitro mucoadhesion testing method for vaginal semisolids: Influence of different testing conditions and instrumental parameters" EUROPEAN JOURNAL OF PHARMACEUTICS AND BIOPHARMACEUTICS, ELSEVIER SCIENCE PUBLISHERS B.V., AMSTERDAM, NL, vol. 69, no. 2, 1 juin 2008 (2008-06-01), pages 622-632, XP022664278 ISSN: 0939-6411 [extrait le 2008-01-14]
- PEPPAS N A ET AL: "Hydrogels as mucoadhesive and bioadhesive materials: a review" BIOMATERIALS, ELSEVIER SCIENCE PUBLISHERS BV., BARKING, GB, vol. 17, no. 16, 1 août 1996 (1996-08-01), pages 1553-1561, XP004032960 ISSN: 0142-9612

EP 2 223 082 B1

**Description**

## DOMAINE D'APPLICATION

La présente invention a trait au domaine pharmaceutique, cosmétique et nutraceutique et plus particulièrement à celui des dispositifs de détermination de la bio adhésivité des préparations pâteuses destinées à être appliquées sur les muqueuses ou la peau.

## DESCRIPTION DE L'ART ANTERIEUR

Le domaine de la pharmacie, de la nutraceutique et de la cosmétique font appel à un très grand nombre de formes médicamenteuses tels que :

- des comprimés de toute nature : enrobés, dragéifiés, effervescents, à libération prolongée, etc...
- des gélules contenant des poudres, des microgranules, des masses cireuses, etc....
- des liquides tels que des sirops, des suspensions, des laits, des collyres, etc.....
- des produits semi-pâteux : des suppositoires, des crèmes, des pommades, des gels, etc...

des dispositifs particuliers comme des patches, des implants. Dans le domaine de la pharmacie, toutes ces formes doivent répondre à un certain nombre de critères en fonction de leur qualification. C'est ainsi que pour des comprimés, qu'ils soient enrobés ou non, dragéifiés ou à libération prolongée, la cinétique de dissolution doit être déterminée.
On entend par « cinétique de dissolution », le temps que met le comprimé à libérer son principe actif dans le milieu de dissolution, ce dernier étant constitué par un liquide représentant le suc gastrique ou le suc intestinal.
Cette détermination se fait à l'aide d'appareils décrits à la Pharmacopée Européenne.

- appareil de dissolution à palette tournante. Les palettes peuvent être substituées par des paniers dans le cas des gélules. Pour les systèmes transdermiques, une cellule est disposée au fond du réacteur contenant le milieu de dissolution. Sur cette dernière est fixé le patch, l'agitation du milieu étant maintenue par une palette.
- Cellule à flux continu. Contrairement à l'appareil précédent, le milieu de dissolution circule à l'intérieur de la cellule et provoque un lessivage de la forme pharmaceutique. Cette cellule est utilisée aussi bien pour les comprimés que pour les suppositoires.

D'autres tests sont réalisés sur les formes solides telles que la détermination du temps de désagrégation, la dureté des comprimés, etc....
En ce qui concerne les liquides, peu de tests sont mis en oeuvre, hormis la détermination de la viscosité ou de la densité lorsqu'il s'agit de préparations plus ou moins visqueuses telles que des suspensions. Des tests particuliers sont effectués pour certaines applications de liquides tels que l'obtention de mousse. Dans ce cas précis, un test d'expansion de la mousse formée est réalisé dans le but de déterminer sa capacité à tapisser rapidement une surface donnée.
Pour des liquides conditionnés en spray, seul un test de la dose délivrée est requis mettant en jeu un appareil bien spécifique décrit à la Pharmacopée Européenne.
Hormis la viscosité et la densité qui sont déterminées sur les formes pâteuses, aucun autre test n'est obligatoire en particulier en ce qui concerne les préparations dites muco-adhésives.
La Pharmacopée Européenne décrit ces préparations comme étant « des préparations contenant une ou plusieurs substances actives destinées à être absorbées à travers la muqueuse gingivo-jugale pendant une durée prolongée, en vue d'une action systémique. Elles peuvent se présenter sous la forme de comprimés gingivaux muco-adhésifs ou d'autres préparations solides ou semi-solides muco-adhésives».
Le seul essai requis dans le cas de ces formes est un essai de dissolution prouvant que le produit libère progressivement l'actif dans le temps. Ce test met en oeuvre l'appareil de dissolution à palette tournante.
Rien à ce jour n'est décrit à la pharmacopée Européenne ou dans toute autre documentation officielle internationale concernant une méthode pour mesurer la bio-adhésivité des préparations entre autres, lorsqu'il s'agit de préparations semi-solides.
On entend par «semi-solides» toutes préparations liquides présentant une certaine viscosité allant de 50 cPs à 100.000 cPs et plus.
Cependant, de plus en plus de produits pharmaceutiques et voire cosmétiques sont qualifiés de bio-adhésifs. Nous trouvons dans cette catégorie des produits destinés à la voie oculaire tels que des gels solubles qui ralentissent la libération du principe actif en raison de leur viscosité élevée. Cette viscosité prolonge le temps de contact du principe actif au niveau de la cornée et son temps de présence dans le cul de sac conjonctival. Cette intensification de l'action est due au ralentissement du processus d'élimination au niveau du canal lacrymal de par la viscosité du produit.

Dans certains cas, il aurait été mis en évidence une certaine bio-adhésion des matériaux utilisés, au niveau de la cornée. Ce serait le cas du Carbopol® (HO-WAH HUI et Coll. [1]). Mais le mécanisme de bio-adhésion ne serait pas parfaitement établi et aucune mesure de bio-adhésion n'a été effectuée.

Concernant la muqueuse nasale, le brevet Américain US4226848 fait mention de l'utilisation de dérivés cellulosiques et de polymères acryliques pour une application nasale bio-adhésive. Là non plus, aucune mesure de bio-adhésivité n'a été réalisée.

Ces mêmes dérivés cellulosiques sont utilisés comme excipients bio-adhésifs pour la voie orale, vaginale ou rectale tel que la carboxyméthylcellulose, sans pour autant que la bio-adhésivité soit réellement démontrée.

Sur le plan dispositif de mesure, le seul utilisé à l'heure actuelle, pour mettre en évidence le caractère adhésif des excipients, est un appareil développé par BR Goodrich Instrument Services Division (2), qui n'est autre qu'un tensiomètre. Ainsi, après réalisation d'une solution à 1,2% de l'excipient testé, un échantillon du gel obtenu est placé sur un support en laiton, le tout fixé sur l'appareil de mesure qui détermine la force maximale d'adhésion. En aucun cas, dans cette mesure un élément biologique n'est mis en contact avec le produit à tester. De plus il est nullement fait mention du caractère « bio » adhésif du produit, simplement de son caractère adhésif.

Des variantes de cette méthode ont été mises en oeuvre par Robert, Buri et Peppas (3) en utilisant le tensiomètre DuNouy modifié, en substituant l'anneau de mesure en platine iridium par un disque en nitrocellulose. Cet anneau est immergé dans la solution à analyser et le tensiomètre mesure la force nécessaire pour extraire l'anneau du milieu testé. La force ainsi obtenue permet de calculer la tension de surface du produit. Contrairement au laiton, la nitrocellulose présente un caractère « biologique » plus prononcé. Cependant le caractère bio adhésif en tant que tel n'est pas démontré. Seule la tension superficielle est calculée. Cette valeur en elle-même ne tient pas compte uniquement des liaisons que pourrait avoir le produit avec le composant de la membrane de l'anneau mais aussi des forces de capillarité créées entre solvant et support.

Dans l'article de Flemming MADSEN, Kirsten EBERTH et John D. SMART intitulé "A rheological assessment of the nature of interactions between mucoadhesive polymers and a homogenised mucus gel" de la publication BIOMATERIALS, ELSERVIER SCIENCE PUBLISHERS BV., BARKING, GB volume 19, n°11-12, du 1 juin 1998, pages 1083-1092? XP004161370 ISSN:0142-9612, sont repris les données précédentes concernant le tensiomètre de DuNouy. Mais plus qu'une mesure de tension superficielle, les auteurs préfèrent déterminer la viscosité d'un mélange constitué de mucine et de l'ingrédient ayant potentiellement des propriétés bio adhésives. Ils considèrent que, si le matériau est bio adhésif, celui-ci va se combiner avec la mucine, composant majeur du mucus, conduisant ainsi à une modification des caractéristiques rhéologiques du polymère, voire la mise en évidence d'une synergie entre mucine et polymère sur le plan de la viscosité. En aucun cas, une telle étude permet de mettre en évidence un caractère bio adhésif en tant que tel, à savoir fixation (adhésion) sur un support biologique. Seules des interactions moléculaires peuvent se produire entre mucine et polymère (liaisons hydrogènes) sans pour cela qu'il n'y ait adhésion à un support.

Beaucoup de méthodes de mesure de ce genre, sont décrites dans la publication de NA. PEPPAS et coll. (4). De plus dans la majorité des cas, ces méthodes sont destinées à déterminer la bio-adhésivité de formes solides comme les comprimés et non de préparations semi-pâteuses.

Brannon-Peppas et Reilly (5) étudient la bio-adhésivité de certains matériaux en utilisant une membrane de nitrocellulose humidifiée sur un plan incliné, sur laquelle va s'écouler la composition bio-adhésive. L'humidification de cette membrane est réalisée par l'eau. Le temps que va mettre le produit à s'écouler sur une distance donnée est déterminé.

Comme précédemment aucun élément biologique n'est additionné à la membrane pour mettre en évidence le vrai caractère « bio » adhésif de la préparation.

Dans le cas présent seule une comparaison de temps d'écoulement entre deux excipients permet de dire que l'un est plus adhérent que l'autre, toute proportion gardée si la viscosité du produit n'est pas prise en compte.

De plus Brannon-Peppas et Reilly, comparent les temps d'écoulement des produits testés avec le temps d'écoulement du solvant sur le même support, le solvant étant dans le cas présent l'eau. Il apparaît clairement que, dans une telle étude où le solvant est l'eau ou un autre solvant tel que l'alcool, ou le propylèneglycol ou tout autre solvant pur, le temps d'écoulement de ces produits sera nettement plus rapide que la préparation contenant l'excipient qualifié de bio-adhésif étant donné que ces produits présentent une viscosité proche de 1. De ce fait pour avoir des résultats comparables et tirer des conclusions, il est indispensable de travailler dans les mêmes conditions de viscosités.

Dans une autre étude Brannon-Peppas et Reilly (6) imprègnent la membrane de cellulose par une solution de mucine sur lequel est déposé le produit à tester. Afin de mettre en évidence la bio-adhésivité de la préparation, il font circuler sur le système une solution saline représentant la composition du sang. L'inclinaison du système est telle, 2°, que le produit testé ne s'écoule pas par lui-même. Seule la solution saline est recueillie après écoulement sur le produit, à différents moments et la quantité de substance détachée de son support est mesurée.

Cette méthode permet de mesurer une cinétique de détachement du produit de son support mais ne met pas directement en évidence une bio-adhésivité du produit contenant l'actif car beaucoup de paramètres entrent en ligne de compte dans un tel système :

- le plan d'inclinaison,
- la vitesse d'écoulement de la solution saline,
- la nature de l'excipient bio-adhésif,
- etc....

Concernant la nature du support bio-adhésif, cette cinétique de détachement peut être entachée par la réaction entre les ions de la solution saline et le support lui-même. C'est le cas des carraghénanes qui réagissent fortement avec les ions sodium, potassium entraînant une complexation du support bio-adhésif, donc induisant une augmentation du temps de relargage du produit de son support indépendante de la bio-adhésivité du produit.

Si certain brevets, tel que le brevet EP 0671906 de UNIV BROWN RES FOUND, font aussi mention de la mesure de bio adhésivité des préparations pharmaceutiques, celles-ci s'adressent à des produits solides. Ce brevet répertorie les méthodes utilisées pour déterminer la bio adhésivité : mesure de la tension superficielle telle que décrite précédemment ou utilisation de sondes présentant une cellule fluorescente pour mettre en évidence les liaisons entre les différents composants, polymère et composants de la couche épithéliale de l'intestin. La méthodologie spécifique à ce brevet n'est autre que la détermination d'une force d'arrachement de l'échantillon à partir d'un support imprégné de mucus. Aucun plan incliné n'apparaît à travers la description des différentes méthodes de mesure de bio adhésion décrites dans ce brevet.

Ainsi, après une étude approfondie de la littérature dans le domaine des dispositifs de mesure de la bio-adhésivité, il n'a pas été permis de mettre en évidence un appareil permettant de mesurer la bio-adhésivité en tant que tel.

## DESCRIPTION DU BREVET

Partant de cet état de fait et pour y remédier, l'invention propose un concept original de mesure de bio adhésivité destinée aux formes semi-pâteuses et plus particulièrement d'une préparation muco-adhésive, remarquable en ce que le dispositif de mesure comprend :

- une enceinte climatique,
- un plan inclinable de 45° et plus,
- un support métallique ou plastique gradué,
- deux membranes biologiques, une de référence imprégnée d'eau ou d'une solution tampon et une de mesure imprégnée d'une solution constituée d'un composant biologique,
- un système d'imprégnation des membranes biologiques,
- un système d'injection de la préparation à tester,
- un système de chronométrage du temps d'écoulement de chaque échantillon injecté,
- et un système de calcul du facteur de bio-adhésivité représenté par une différence de temps d'écoulement entre la membrane imprégnée par le composant biologique et la membrane de référence.

Ainsi, la présente invention a pour but de déterminer un facteur de bio-adhésivité des préparations semi-pâteuses, en déterminant le temps d'écoulement de ces dites préparations sur deux types de membranes :

- l'une, dite de référence, dépourvue de matériaux biologiques au sens propre du terme mais imprégnée d'eau ou d'une solution tampon,
- l'autre imprégnée d'un agent biologique tel que des polymucosaccharides.

La différence de temps déterminée entre ces deux mesures représente le caractère bio-adhésif de la préparation au sens propre du terme.

On entend par « matériaux biologiques», tous les constituants de l'être vivant appartenant au monde animal.

On entend par « caractère bio-adhésif» la capacité qu'ont certains composants à se fixer sur les matériaux biologiques tels que ceux constituant l'être vivant.

Cette méthode de mesure n'a pu se faire que grâce au choix judicieux de la membrane biologique mise en oeuvre dans cette méthodologie.

Ainsi, dans la méthode de mesure de Brannon-Peppas et Reilly, la membrane utilisée est en nitrate de cellulose. Or, dans le cas d'une telle membrane, un certain nombre de groupements OH caractérisant la cellulose ont été substitués par des groupements NO. Ces groupements contrairement aux OH sont beaucoup moins réactifs avec des supports avides de groupements OH tels que les polymucosaccharides représentés dans le cas présent par la mucine.

Ceci a été mis en évidence, contre toute attente, en utilisant une membrane en cellulose ou esters de cellulose où les groupements sont encore plus nombreux.

En effet, lors de l'inclinaison à 45° d'une membrane de cellulose fixée sur son support et recouverte d'une solution aqueuse à 5% de mucine à raison de 1ml pour 22cm$^2$, aucun écoulement de cette solution n'est observé. La membrane reste recouverte d'un film fluide sans qu'il y est écoulement de ce dernier.

Cette invention est applicable à tous types de préparations présentant un caractère newtonien. On entend par « caractère newtonien », tous produits qui s'écoulent librement sans application d'une quelconque force telle qu'une agitation, pour le faire s'écouler.

De même cette détermination peut être faite sur des produits dits « thixotropes ».

On entend par « thixotropes » toutes préparations qui non soumises à agitation ont tendance à se prendre en masse. Dès une simple agitation la préparation redevient instantanément liquide.

Ce procédé est basé sur le fait que certaines substances à l'état solide ou à l'état liquide ont la propriété de se complexer avec certaines molécules des muqueuses ou des sécrétions de ces dites muqueuses. Ces dites substances se retrouvent donc figées à la surface des muqueuses.

On entend par « complexer » la formation de liaisons chimiques telles que :

- des liaisons hydrogènes, dans le cas des dérivés cellulosiques ou acryliques tels que les Carbopol®
- ou liaisons de complexation dans le cas des carraghénanes : formation de liaisons entre les groupements sulfates des carraghénanes et les protéines des muqueuses ou des sécrétions de ces dernières.

## DESCRIPTION APPROFONDIE

Le dispositif de détermination de la bio-adhésivité faisant l'objet de la présente invention fait appel aux propriétés des excipients dits bio-adhésifs.

Ces excipients sont des matières :

- très avides d'eau tels que les celluloses. Elles forment des liaisons hydrogènes avec l'eau ($H_2O$) présente sur les muqueuses ou certains composants biologiques présentant de nombreux groupements hydroxyles (OH)
- ou très réactives sur le plan chimique grâce à la présence de groupements ionisés sur leur squelette tels que les groupements sulfates des carraghénanes. Dans ce cas, les groupements anioniques vont réagir avec les charges positives des protéines présentes sur les muqueuses et dans les sécrétions de ces dernières.

Dans les deux cas ces matières premières vont se retrouver plus ou moins fixées sur les muqueuses comme si elles étaient « collées » à cette dernière.

Cette propriété a été mise à profit dans le dispositif, objet de la présente invention dans le cas des formes semi-pâteuses.

En effet, considérant que ces substances ont tendance à se fixer sur des muqueuses biologiques, leur écoulement sur une membrane disposée sur un plan incliné et imprégnée d'une substance biologique, doit en être retardé comparativement à une membrane vierge de tout composant biologique tel que décrit précédemment, dite membrane de référence. Une telle détermination élimine le facteur viscosité. En effet, plus une solution est visqueuse et plus elle aura tendance à s'écouler lentement. Une telle mesure d'écoulement ne présume en rien de l'adhésivité d'une substance. Inversement, une préparation très liquide va s'écouler très vite sur un plan incliné. Seule une mesure comparative de temps d'écoulement de ces préparations sur une membrane de référence non imprégnée de substances biologiques permet réellement d'estimer un caractère bio-adhésif des préparations abstraction faite de la viscosité.

Appliquant cette hypothèse à une solution de carraghénanes de concentration déterminée, il a été possible de mettre en évidence une nette différence d'écoulement sur une membrane imprégnée ou non d'une solution de polymucosaccharides. (Tableau n°1)

| Concentration en carraghénanes | Sans mucine (SM) | Avec mucine (AM) | Aptitude à l'adhésion (AM-SM) | |
|---|---|---|---|---|
| | | | Données | Moyenne |
| 2% | 38" | 54" | 16" | 12" |
| | 43" | 52" | 9" | ±3" |
| | 41" | 53"' | 12" | 28.47% |
| 3% | 5'52 | 7'58 | 126" | 122" |
| | 5'59 | 8'01 | 122" | ±3" |
| | 6'03 | 8'02 | 119" | 2.87% |
| 5% | 17'58 | 22'05 | 247" | 251" |
| | 17'59 | 22'14 | 255" | ±4" |

(suite)

| Concentration en carraghénanes | Sans mucine (SM) | Avec mucine (AM) | Aptitude à l'adhésion (AM-SM) | |
|---|---|---|---|---|
| | | | Données | Moyenne |
| | 18'08 | 22'19 | 251" | 1.59% |

Ainsi, pour permettre une telle mesure, l'invention propose un dispositif disposé dans une enceinte climatique constitué :

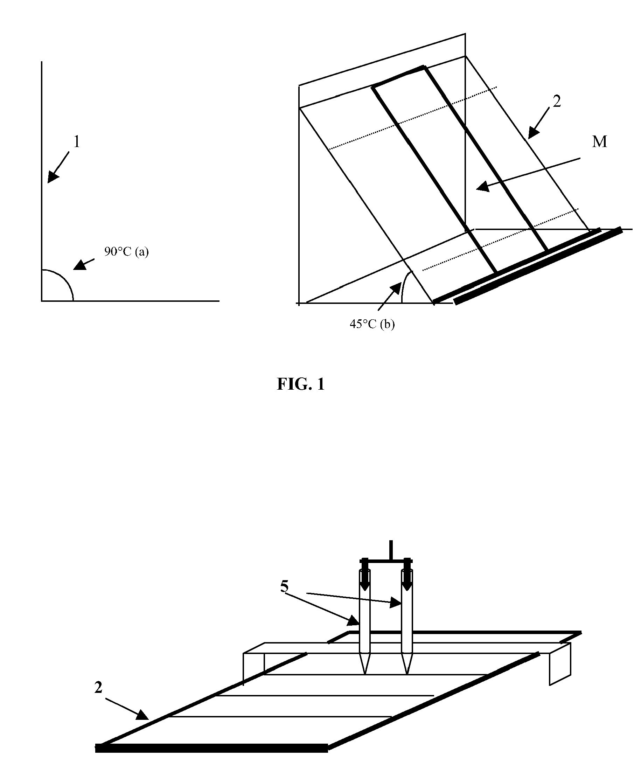

- d'un plan inclinable 1 (illustré sur le dessin de la figure 1 annexée) sur lequel sont disposées les deux membranes biologiques M dont l'une (telle celle référencée sur le dessin de la figure 1) est imprégnée d'une solution de polymucosaccharides fixées sur une plaque 2,
- d'un système d'injection d'échantillons 5 de la préparation à tester (illustré sur le dessin de la figure 2 annexée),
- et d'un système de chronométrage permettant de mesurer les temps d'écoulement des deux échantillons de la préparation testée, injectés sur l'une et l'autre des deux membranes biologiques, ledit système de chronométrage étant relié à une unité de traitement électronique apte à fournir en sortie un signal représentatif du caractère bio adhésif de la susdite préparation en calculant le facteur de bio-adhésivité représenté par une différence de temps d'écoulement entre la membrane imprégnée par le composant biologique et la membrane de référence.

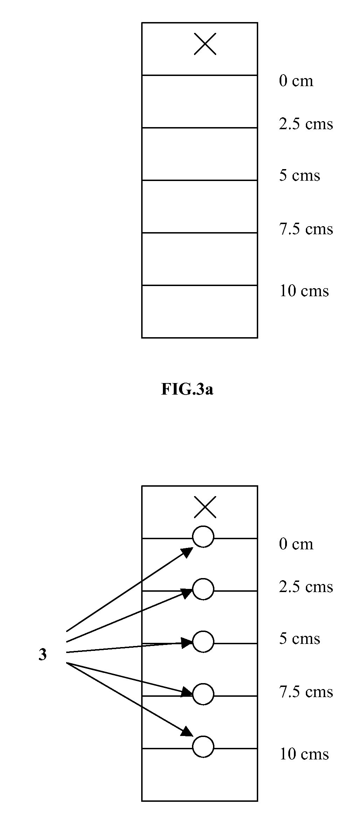

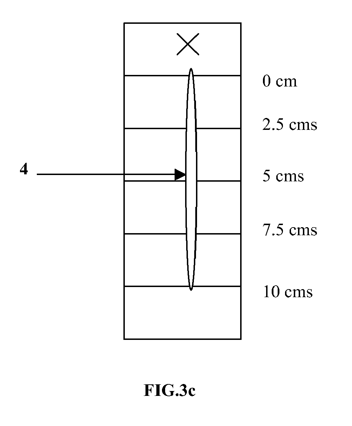

La plaque 2 peut être en acier inoxydable ou en matière plastique suffisamment rigide pour éviter dans le temps toute courbure du plan d'écoulement.
La largeur de cette dernière peut varier de 10 cms à 100 cms et plus, en fonction du nombre de mesures à réaliser en série.
La hauteur de cette plaque est fixée à 20 cms car le temps d'écoulement est déterminé sur une distance variant de 2,5 cms à 10,0 cms. Au-delà de 20 cms de hauteur, la membrane fixée sur ce plan incliné se dessèche progressivement, faussant les mesures.
Cette plaque-support est graduée de 2,5 cms en 2,5 cms.
La première graduation, en partant du haut (figures 3a, 3b et 3c), correspond à la zone de dépôt des échantillons et est identifiée par une croix.
La deuxième graduation, à 2,5 cms, détermine le début de la zone de chronométrage de l'écoulement.
De 2,5 cms (deuxième graduation) jusqu'à 10 cms (sixième graduation), des graduations intermédiaires peuvent être ajoutées en fonction de la viscosité des solutions testées.
La sixième graduation correspond à la fin de la zone de chronométrage.
Cette plaque-support peut être déposée manuellement sur le plan d'inclinaison 1, présentant un angle d'inclinaison variable (a) de 45° et plus. Cet angle d'inclinaison (a) conduit à une inclinaison (b) de la plaque 2 pouvant varier de 10 à 90° (figure n°1).
Même si la détermination de la différence du temps d'écoulement fait abstraction de la viscosité, il est cependant nécessaire d'en tenir compte dans l'inclinaison du plan incliné. En effet plus la préparation sera visqueuse et plus elle aura tendance à s'écouler lentement sur un plan incliné de faible angle d'inclinaison et inversement pour des solutions très fluides. (tableau n°2 ci-après avec une inclinaison de 45°)

| Concentration en carraghénanes | Sans mucine (SM) | Avec mucine (AM) | Aptitude à l'adhésion (AM-SM) | |
|---|---|---|---|---|
| | | | Données | Moyenne |
| 3% | 11'25 | 16'22 | 297" | 302" |
| | 11'22 | 16'30 | 308" | ±5" |
| 15400 cPs | 11'32 | 16'34 | 302" | 1.82% |
| 4% | 25'50 | 9.8 cm en 60' | / | |
| | 25'45 | 9.9 cm en 60' | / | / |
| 30333 cPs | 25'44 | 9.7 cm en 60' | / | |
| 5% | 30'37 | 8.5 cm en 60' | / | |
| | 30'28 | 8.6 cm en 60' | / | / |
| 41666 cPs | 30'41 | 8.5 cm en 60' | / | |

Pour résoudre ce problème, l'inclinaison de la surface peut se faire de manière manuelle, semi-automatique par un système de leviers ou encore automatiquement par des engrenages pilotés électroniquement en programmant un angle d'inclinaison défini allant de 0° à 90°, le degré d'inclinaison pouvant varier de 2° en 2° ou de 5° en 5°. Afin d'éviter de donner de l'inertie à la masse déposée, l'inclinaison doit se faire le plus lentement possible. Ainsi la vitesse d'inclinaison de la plaque doit être comprise entre 1 centième de seconde par degré d'inclinaison et 5 centièmes de seconde par degré d'inclinaison.

Suivant l'utilisation du dispositif de mesure de bio adhésivité, contrôle de routine ou travaux de recherche, la détermination du temps d'écoulement peut se faire de différentes façons.

Dans le cadre d'un usage en contrôle de routine la détermination peut être réalisée manuellement à l'aide d'un chronomètre ou en disposant des détecteurs à différents niveaux du plan incliné. Ces détecteurs peuvent être des cellules photoélectriques ou des détecteurs par réflexion ou l'association des deux. Ils sont placés de part et d'autre du plan incliné, à la hauteur de la deuxième graduation, début du chronométrage, et de la sixième graduation, fin de chronométrage, dans le cas des cellules photoélectriques.

Pour les détecteurs à réflexion, ceux-ci sont placés à la surface du plan incliné à une distance plus ou moins variable en fonction de la sensibilité du détecteur utilisé. Cette distance est comprise entre 2 mm et 20 mm. Ces détecteurs peuvent être mobiles de manière à les disposer sur une autre graduation autre que la sixième, la cinquième, la quatrième ou la troisième, ceci en fonction de la viscosité du produit.

Dans le cas d'une prise intermédiaire de mesure, il est possible de disposer différents détecteurs sur tout le trajet de l'écoulement. Ils sont reliés entre eux de telle manière qu'ils n'interrompent pas le chronométrage au cours de l'écoulement du produit, mais simplement à la sixième graduation. C'est ainsi qu'il est possible de monter en série 4 détecteurs au niveau de la deuxième graduation, chacun étant relié à un autre positionné sur chaque autre graduation. Au passage de chaque graduation, le produit interrompt le signal d'un des détecteurs sans interférer sur celui des autres. Dans ces conditions des temps intermédiaires peuvent être déterminés voire enregistrés dans le but d'obtenir des profils d'écoulement du produit dans le temps. Le nombre de détecteurs positionnés au niveau de la deuxième graduation peut être variable et dépend du nombre de graduations intermédiaires positionnées sur le trajet du produit. Ce nombre peut être compris entre 1 et 40.

Dans le cas des cellules photoélectriques leur déclenchement ne peut se faire que si le support incliné présente des perforations 3 (figure 3b) pour laisser passer le rayon lumineux. Ces perforations se situent au niveau de la deuxième graduation et de la sixième ou peuvent être positionnées tout le long du trajet de l'écoulement. Plus que des perforations 3, une fente 4 (figure 3c) peut être réalisée tout le long de l'écoulement, les cellules étant toujours disposées à la hauteur des différentes graduations de la plaque.

L'appréciation de la bio-adhésivité d'un matériau se fait en calculant la différence entre l'écoulement du produit en présence de composants biologiques fixés sur la membrane cellulosique et celui obtenu sur la membrane cellulosique pure de référence. Ces deux mesures, en fonction de l'appareillage utilisé, peuvent se faire l'une après l'autre ou simultanément.

Dans le cas d'une mesure simultanée, deux rampes de détecteurs sont montées sur le dispositif, déterminant dans chaque cas le temps d'écoulement dans les deux conditions de travail, avec ou sans polymucosaccharides, la différence de temps se calculant manuellement.

Cette différence peut être obtenue directement en positionnant des détecteurs sur les deux trajets mais reliés entre eux de telle façon que la lecture donne directement la différence de temps.

Le montage le plus simple est le positionnement d'un détecteur en fin de trajet du produit testé sans polymucosaccharides (SP) et un deuxième en fin de trajet du produit testé avec les polymucosaccharides (AP). Lorsque SP arrive en fin de trajet, le détecteur se déclenche entraînant le démarrage du chronomètre. Ce dernier s'arrête lorsque (AP) passe au niveau du deuxième détecteur.

L'enregistrement du temps total sur les deux membranes peut être effectué simultanément à l'enregistrement de la différence de temps. Ceci est obtenu en positionnant un détecteur au démarrage de l'écoulement sur chaque membrane déclenchant ainsi deux chronomètres indépendants de celui de la mesure différentielle. Leur arrêt est obtenu en positionnant un deuxième détecteur en fin d'écoulement. Ainsi dans le cas de (SP) celui-ci arrête le chronomètre de l'écoulement total et le deuxième agit comme précédemment en déclenchant le chronomètre de la mesure différentielle au niveau de (AP), celui-ci s'arrêtant lors de l'écoulement total au niveau de (AP)

Suivant la taille du support incliné, plusieurs expériences peuvent être réalisées simultanément.

Par conséquent, le nombre de perforations 3 ou de fentes 4 ainsi que celui des détecteurs pouvant être positionnés sur ce dernier, est variable et répond à un facteur 2.

Le dispositif de mesure met en oeuvre des membranes biologiques recouvertes ou non d'une solution de polymucosaccharides.

Les membranes utilisées pour la détermination de la bio adhésivité sont de nature cellulosique ou dérivés de cellulose, la préférence allant aux membranes de cellulose pure ou à base d'esters de cellulose autre que la nitrocellulose. Ces membranes sont régénérées avant emploi soit dans l'eau déminéralisée ou dans une solution tamponnée aqueuse. Par capillarité, ces membranes sont disposées sur le plan incliné, recouvrant les perforations destinées au passage du rayon lumineux des cellules photoélectriques.

Elles sont maintenues en place par un simple retournement de l'excédent de membrane à chaque extrémité du plan incliné ou à l'aide de pinces recouvrant la largeur de la membrane ou encore à l'aide d'un système de pincement de la membrane incorporé au plan incliné.

Avant inclinaison du support, un temps d'attente est nécessaire pour stabiliser le dépôt. Suivant la viscosité de la préparation, le dépôt a tendance à plus ou moins s'étaler. Afin d'éviter que l'écoulement du dépôt soit influencé par les rebords de la membrane, effet de capillarité, suite à un étalement trop important, une largeur minimale de la membrane est requise. Cette largeur est comprise entre 20 mms et 60 mms.

Après régénération des membranes, la membrane de référence est imprégnée soit par de l'eau déminéralisée ou par une solution tampon correspondant aux différentes valeurs de pH des sécrétions de l'organisme, telle que la salive, les larmes, le suc gastrique, le suc intestinal, les sécrétions vaginales et rectales.

La quantité d'eau déminéralisée ou de solution tampon déposée à la surface de la membrane varie entre 0,5 ml et 3 ml.

La membrane de mesure est imprégnée d'une solution de polymucosaccharides. Celle-ci peut être constituée par de la mucine ou de ses dérivés. En effet, la mucine et ses dérivés sont les composants majeurs des muqueuses et des différentes sécrétions de l'organisme. En fonction du produit testé, la concentration dans le milieu aqueux ou tamponné en phospholipides, peut varier de 0,5% à 10% en poids par rapport au volume total de la solution finale.

Quel que soit le liquide d'imprégnation de la membrane, celui-ci est déposé à la surface de la membrane fixée sur le support, ce dernier étant maintenu à l'horizontal. Le dépôt est effectué à l'aide d'une seringue mono ou multicanaux. Un étaleur classiquement utilisé en microbiologie permet de répartir de façon homogène le liquide à la surface de la membrane.

Le dépôt du produit à tester peut être réalisé manuellement à l'aide d'une seringue. La hauteur du dépôt a été déterminée de telle sorte que le dépôt se stabilise rapidement avant inclinaison de la plaque 2. En effet, des études ont montré que la hauteur du dépôt influençait la vitesse d'écoulement de ce dernier. Ces variations sont liées à l'inertie d'une masse en mouvement. Cette inertie répond à l'équation suivante :

$$I = 1/2MV^2$$

Où :

- I, représente l'inertie
- M, la masse de produit en mouvement
- V, la vitesse de déplacement de la masse en mouvement. Ainsi, plus le dépôt de la masse se fera à une hauteur élevée, plus l'inertie du produit sera importante (effet «boule de neige»), nécessitant un temps de stabilisation du dépôt plus long.

(Tableau n°3 ci-dessous avec une hauteur du dépôt et une solution à 3% en carraghénanes)

| Hauteur du dépôt | Sans mucine (SM) | Avec mucine (AM) | Aptitude à l'adhésion (AM-SM) | |
|---|---|---|---|---|
| | | | **Données** | **Moyenne** |
| 0-0,5 cm | 3'56 | 6'02 | 2'06 | 2'06 |
| | 3'51 | 5'59 | 2'08 | ±1" |
| | 3'49 | 5'54 | 2'05 | 0.98% |
| 1,0 cm | 5'37 | 7'33 | 1'56 | 1'59 |
| | 5'49 | 7'48 | 1'59 | ±2" |
| | 5'53 | 7'55 | 2'02 | 2,06% |
| 2,5 cm | 4'20 | 5'46 | 1'26 | 1'34 |
| | 4'32 | 6'04 | 1'32 | ±8" |
| | 4'37 | 6'23 | 1'46 | 8'85% |

Ainsi, pour limiter le temps de stabilisation du produit déposé à 30 secondes, la hauteur du dépôt doit être comprise entre 2 mms et 15 mms.

Afin d'éviter des fluctuations dans le temps d'écoulement dû à une variation de hauteur du dépôt, celui-ci peut être réalisé de façon automatique à l'aide du pousse seringue 5 (tel qu'illustré sur le dessin de la figure 2) positionné à la verticale de la membrane, à une distance définie fixe, la plus faible possible.

EP 2 223 082 B1

Dans le cas d'une mesure simultanée du temps d'écoulement sur les deux types de membranes imprégnées, le pousse seringue 5 permet, de plus, le dépôt en parallèle du produit sur les deux membranes grâce à la présence de deux seringues actionnées au même moment et en même temps. Suivant le nombre de mesures simultanées, le pousse seringue pourra être équipé d'autant de seringues répondant à un facteur 2.

Un autre paramètre peut influencer la mesure du temps d'écoulement : la température à laquelle est réalisée la détermination de la bio-adhésivité. En effet, la majorité des préparations visqueuses sont sensibles au paramètre température. Plus la température environnante est élevée, plus la viscosité des préparations diminue. Par conséquent, le temps d'écoulement s'en trouvera altéré comme le montre le tableau suivant (Tableau n°4 : température de travail, solution à 3% de carraghénanes).

| Température de travail | Sans mucine (SM) | Avec mucine (AM) | Aptitude à l'adhésion (AM-SM) | |
|---|---|---|---|---|
| | | | Données | Moyenne |
| 16-17°C | 4'57 | 8'01 | 3'04 | 3'04 |
| | 5'04 | 8'08 | 3'04 | $\pm$0'94 |
| 3420 cPs | 4'48 | 7'54 | 3'06 | 0.51% |
| 20°C | 3-51 | 5'59 | 2'08 | 2'04 |
| | 3'46 | 5'50 | 2'04 | $\pm$3" |
| 3048 cPs | 3'59 | 5'59 | 2'00 | 2.63% |
| 25°C | 3'47 | 5'14 | 1'27 | 1'28 |
| | 3'39 | 5'05 | 1'26 | $\pm$2" |
| 2598 cPs | 3'12 | 4'44 | 1'32 | 2.97% |

Afin d'annuler l'influence de ce facteur sur le temps d'écoulement des préparations bio-adhésives, le dispositif de mesure est placé dans une enceinte climatique dont la température de l'air est contrôlée. Cette dernière peut varier en fonction des produits testés et des études effectuées de 15°C $\pm$ 5°C à 50°C $\pm$ 5°C.

Que ce soit l'angle d'inclinaison de la plaque, le temps au bout duquel celle-ci doit être inclinée, la détermination des temps d'écoulement sur différentes distances, la dépose du produit à tester, et la température de travail, tous ces paramètres de conditions opératoires peuvent être programmés et pilotés par ordinateur.

Les exemples de dispositifs figurant sur les figures sont des appareillages possibles selon la présente invention et ils ne les limitent en aucune façon.

Ainsi le dispositif le plus simple comprend :

- un plaque de mesure 2 indépendante du support d'inclinaison,
- un support d'inclinaison conduisant à un angle d'inclinaison de la plaque de 45°C,
- un chronomètre se déclenchant manuellement au passage de la deuxième graduation et s'arrêtant manuellement au passage de la sixième graduation,
- une seringue d'injection du produit indépendante du dispositif de mesure.

Dans une forme évoluée du dispositif, l'appareillage comprend :

- une plaque de mesure 2 placée à l'horizontale,
- un système d'injection constitué d'un pousse seringue 5, solidaire de la plaque de mesure 2 et disposé à la verticale de celle-ci à 1 cm,
- un système d'inclinaison automatique de la plaque solidaire de cette dernière,
- un système automatique de chronométrage utilisant des cellules photoélectriques,
- un système de calcul des paramètres de bis-adhésivité :

    temps d'écoulement, différence du temps d'écoulement, etc....

- un système informatique de pilotage du dispositif.

**BIBLIOGRAPHIE**

(1) HUI H.W., et Coll. Ocular Delivery of progesterone using a bioadhesive polymer, Intl. J. Pharma., 26 (1), 203-213, 1985

(2) BF GOODRICH, the proven polymers in pharmaceuticals, 1998

(3) ROBERT C, BURI P, PEPPAS NA, Expérimental method for bioadhesive testing of various polymers, Acta Pharmacol Technol. 1988, 34 : 95-98

(4) NA PEPPAS and SAHLIN J., Hydrogels as mucoadhesive and bioadhesive materials : a review, Biolaterials, 17, 1996, 1553-1561

(5) BRANNON-PEPPAS L. and REILLY W, FMC document interne

(6) BRANNON-PEPPAS L and REILLY W, in vitro testing of bioadhesion of solutions for buccal administration and drug delivery., Proceed. Intern. Symp. Control. Rel. Bioact. Mater, 23 (1996), Controlled Release Society, Inc. 513-514

**Revendications**

1. Dispositif permettant de mesurer la bio-adhésivité d'une préparation muco-adhésive sous forme semi-pâteuse, du type de celui comprenant :

   - au moins une membrane biologique (M),
   - un plan inclinable (1) de 45° et plus permettant d'incliner une membrane biologique (M) en fonction de la viscosité de la préparation muco-adhésive, après un temps d'attente nécessaire pour stabiliser le dépôt d'un échantillon de cette dernière,
   - et un système de chronométrage du temps d'écoulement de l'échantillon de préparation muco-adhésive afin d'enregistrer le temps d'écoulement de ce dernier sur la membrane biologique (M), **CARACTERISE EN CE QU'**il est constitué :

      * d'une enceinte climatique dans laquelle sont déposées:

         - une membrane biologique (M) de référence imprégnée d'eau ou de solution tampon,
         - et une membrane biologique (M) de mesure imprégnée d'une solution constituée d'un composant biologique de sorte que la membrane (M) de mesure reste recouverte d'un film fluide sans qu'il n'y ait écoulement de ce dernier,

      ces deux membranes (M) en cellulose ou en esters de cellulose autre que la nitrocellulose étant fixées sur une plaque-support métallique ou plastique graduée associée au plan inclinable (2) de manière à déposer un échantillon d'une même préparation muco-adhésive à tester sur les deux membranes biologiques (M),
      * des moyens de réglage de la température de l'enceinte climatique en fonction des produits testés,
      * un système d'injection (5) de la préparation à tester,
      * un système de chronométrage du temps d'écoulement de chaque échantillon injecté,
      * et un système de calcul du facteur de bio adhésivité représenté par une différence de temps d'écoulement entre la membrane imprégnée par le composant biologique et la membrane de référence.

2. Dispositif de mesure selon la revendication 1, **CARACTERISE EN CE QUE** le composant biologique de ladite solution formant un film fluide sur la membrane de mesure (M) est de la mucine ou un dérivé de mucine.

3. Dispositif de mesure selon la revendication 1 et/ou 2, **CARACTERISE EN CE QUE** ladite solution constituée d'un composant biologique formant un film fluide sur la membrane de mesure (M) présente une concentration en polymucosaccharides comprise entre 0,5% et 10% exprimée en poids par rapport au volume total de la solution.

4. Dispositif de mesure selon la revendication 1, **CARACTERISE EN CE QUE** la température de l'enceinte climatique se situe entre 15°C et 50°C.

5. Dispositif de mesure selon la revendication 1, **CARACTERISE EN CE QUE** l'inclinaison (a) du plan (1) portant la plaque-support (2) peut être variée de 0 à 90°.

**6.** Dispositif de mesure selon la revendication 1, **CARACTERISE EN CE QUE** le susdit système de chronométrage est constitué par des détecteurs à cellules photoélectriques ou des détecteurs à réflexion ou l'association des deux types de détecteurs, détecteurs placés de part et d'autre du plan incliné (1).

**7.** Dispositif de mesure de bio-adhésivité d'une préparation muco-adhésive selon la revendication 1, **CARACTERISE EN CE QUE** le susdit système d'injection (5) est approprié pour injecter à une hauteur déterminée, un échantillon d'une préparation q, sur les membranes biologiques (M) fixées sur le support (2) maintenu à l'horizontal.

## Patentansprüche

**1.** Vorrichtung, die die Messung der biologischen Haftung einer mucoadhäsiven Zubereitung in halb pastöser Form der Art ermöglicht, die Folgendes umfasst:

- mindestens eine biologische Membran (M),
- eine um 45° und mehr neigbare Ebene (1), die ermöglicht, eine biologische Membran (M) je nach der Viskosität der mucoadhäsiven Zubereitung nach einer Wartezeit zu neigen, die erforderlich ist, um die Ablagerung einer Probe dieser Letzteren zu stabilisieren,
- und ein System zur Chronometrierung der Ablaufzeit der Probe der mucoadhäsiven Zubereitung, um die Ablaufzeit dieser Letzteren auf der biologischen Membran (M) aufzuzeichnen, **dadurch gekennzeichnet, dass** sie aus Folgendem besteht:

-- einer Klimakammer, in der Folgendes abgelagert ist:

- eine biologische Referenzmembran (M), die mit Wasser oder Pufferlösung imprägniert ist,
- und eine biologische Messmembran (M), die mit einer Lösung imprägniert ist, die aus einer biologischen Komponente besteht, so dass die Messmembran (M) mit einem Fluidfilm bedeckt bleibt, ohne dass dieser Letztere abläuft,

wobei diese zwei Membrane (M) aus Zellulose oder Zelluloseestern außer Nitrozellulose auf einer graduierten Stützplatte aus Metall oder Plastik fixiert sind, die mit der neigbaren Ebene (2) derart assoziiert ist, dass eine Probe einer gleichen zu testenden mucoadhäsiven Zubereitung auf den zwei biologischen Membranen (M) ablegt wird,
-- Mittel zur Einstellung der Temperatur der Klimakammer je nach den getesteten Produkten,
-- ein System zur Injektion (5) der zu testenden Zubereitung,
-- ein System zur Chronometrierung der Ablaufzeit jeder injizierten Probe,
-- und ein System zur Berechnung des Faktors der biologischen Haftung, dargestellt durch eine Differenz der Ablaufzeit zwischen der Membran, die mit der biologischen Komponente imprägniert ist, und der Referenzmembran.

**2.** Vorrichtung nach Anspruch 1, **dadurch gekennzeichnet, dass** die biologische Komponente der Lösung, die einen Fluidfilm auf der Messmembran (M) bildet, Mucin oder ein Derivat von Mucin ist.

**3.** Vorrichtung nach Anspruch 1 und/oder 2, **dadurch gekennzeichnet, dass** die Lösung, die aus einer biologischen Komponente besteht, die einen Fluidfilm auf der Messmembran (M) bildet, eine Konzentration aus Polymucosacchariden darstellt, die zwischen 0,5 % und 10 %, ausgedrückt in Gewicht mit Bezug auf das Gesamtvolumen der Lösung, darstellt.

**4.** Vorrichtung nach Anspruch 1, **dadurch gekennzeichnet, dass** die Temperatur der Klimakammer zwischen 15 °C und 50 °C liegt.

**5.** Vorrichtung nach Anspruch 1, **dadurch gekennzeichnet, dass** die Neigung (a) der Ebene (1), die die Stützplatte (2) trägt, von 0 bis 90° variiert werden kann.

**6.** Vorrichtung nach Anspruch 1, **dadurch gekennzeichnet, dass** das System zur Chronometrierung aus Sensoren mit photoelektrischen Zellen oder aus reflektierenden Sensoren oder aus der Verbindung der zwei Arten von Sensoren besteht, wobei die Sensoren auf beiden Seiten der geneigten Ebene (1) angeordnet sind.

7. Vorrichtung zur Messung der biologischen Haftung einer mucoadhäsiven Zubereitung nach Anspruch 1, **dadurch gekennzeichnet, dass** das System zur Injektion (5) geeignet ist, um bis zu einer bestimmten Höhe eine Probe einer Zubereitung q auf die biologischen Membrane (M) zu injizieren, die auf der Stütze (2), gehalten in der Horizontale, fixiert sind.

**Claims**

1. Device enabling the measurement the bioadhesiveness of a mucoadhesive preparation in semi-pasty form, of the type of that comprising :

   - at least one biological membrane (M),
   - a surface (1) suitable for inclination by 45° or more for inclining one biological membrane (M) according to the viscosity of the mucoadhesive preparation, after a waiting time required to stabilise the deposit of a sample thereof,
   - and a system for timing the flow time of the mucoadhesive preparation sample in order to record the the flow time thereof on the biological membrane (M), **characterised in that** it consists of:

     * a climatic chamber wherein are deposited :

       - one biological reference membrane (M) impregnated with water or buffer solution,
       - and one biological measurement membrane (M) impregnated with a solution consisting of a biological constituent so that the measurement membrane (M) remains coated with a fluid film without there being any flow therefrom,

     these two membranes (M) of cellulose or cellulose esters other than nitrocellulose being bound with a graduated metal or plastic support plate associated with a surface (2) suitable for inclination so as to deposit a sample of the same mucoadhesive preparation under test on both biological membranes (M),
     * temperature control means of the climatic chamber based on the products tested,
     * a system (5) for injecting the preparation under test,
     * a system for timing the flow time of each sample injected,
     * and a system for calculating the bioadhesiveness factor represented by a difference in flow time between the membrane impregnated by the biological constituent and the reference membrane.

2. Measurement device according to claim 1, **characterised in that** the biological constituent of said solution forming a fluid film on the measurement membrane (M) is mucin or a mucin derivative.

3. Measurement device according to claim 1 and/or 2, **characterised in that** said solution consisting of a biological constituent forming a fluid film on the measurement membrane (M) has a polymucosaccharide concentration between 0.5% and 10% expressed by weight with reference to the total volume of the solution.

4. Measurement device according to claim 1, **characterised in that** the temperature of the climatic chamber is between 15°C and 50°C.

5. Measurement device according to claim 1, **characterised in that** the inclination (a) of the surface (1) supporting the support plate may be varied from 0 to 90°.

6. Measurement device according to claim 1, **characterised in that** said timing system consists of photoelectric cell detectors or reflection detectors or the combination of both types of detectors, the detectors being positioned on either side of the inclined surface (1).

7. Device for measuring the bioadhesiveness of a mucoadhesive preparation according to claim 1, **characterised in that** said injection system (5) is suitable for injecting at a predetermined height, a sample of a preparation q, on the biological membranes (M) bound the substrate (2) kept horizontal.

1

90°C (a)

2

M

45°C (b)

**FIG. 1**

5

2

**FIG.3a**

0 cm

2.5 cms

4

5 cms

7.5 cms

10 cms

**FIG.3c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4226848 A

- EP 0671906 A

**Littérature non-brevet citée dans la description**

- A rheological assessment of the nature of interactions between mucoadhesive polymers and a homogenised mucus gel. **FLEMMING MADSEN ; KIRSTEN EBERTH ; JOHN D. SMART.** BIOMATERIALS. ELSERVIER SCIENCE PUBLISHERS BV, 01 Juin 1998, vol. 19, 1083-1092
- **HUI H.W.** Ocular Delivery of progesterone using a bioadhesive polymer. *Intl. J. Pharma.,* 1985, vol. 26 (1), 203-213
- **BF GOODRICH.** *the proven polymers in pharmaceuticals,* 1998

- **ROBERT C ; BURI P ; PEPPAS NA.** Expérimental method for bioadhesive testing of various polymers. *Acta Pharmacol Technol.,* 1988, vol. 34, 95-98
- **NA PEPPAS ; SAHLIN J.** Hydrogels as mucoadhesive and bioadhesive materials : a review. *Biolaterials,* 1996, vol. 17, 1553-1561
- **BRANNON-PEPPAS L. ; REILLY W.** *FMC document interne*
- in vitro testing of bioadhesion of solutions for buccal administration and drug delivery. **BRANNON-PEPPAS L ; REILLY W.** Proceed. Intern. Symp. Control. Rel. Bioact. Mater. Controlled Release Society, Inc, 1996, vol. 23, 513-514